# EUROPEAN PATENT APPLICATION

(11) **EP 4 617 153 A1**
(43) Date of publication of application: **17.09.2025**
(21) Application number: 25154951.5
(22) Date of filing: 30.01.2025
(51) Int. Cl.: B62D 25/08

(54) **LOWER VEHICLE-BODY STRUCTURE OF VEHICLE**

(30) Priority: 14.03.2024 JP 2024040204
(71) Applicant: MAZDA MOTOR CORPORATION, Hiroshima 730-8670 (JP)
(72) Inventor: MATSUDA, Yamato, Aki-gun, Hiroshima 730-8670 (JP); KIYOTAKE, Shinji, Aki-gun, Hiroshima 730-8670 (JP); IKEDA, Toshiharu, Aki-gun, Hiroshima 730-8670 (JP); MASUDA, Tomoya, Aki-gun, Hiroshima 730-8670 (JP)
(74) Representative: Müller-Boré & Partner Patentanwälte PartG mbB

(57) **Abstract**

A suspension housing 4 made of sheet metal that is provided to a frame 3 constituting a closed cross-section portion 3s extending in a front-rear direction, and supports a suspension (120) includes a damper mounting surface portion 41 and a peripheral wall 42 extending downward from a peripheral edge of the damper mounting surface portion 41, and second partition walls 62, 63 are provided inward of the peripheral wall 42 in a vehicle width direction, the second partition walls 62, 63 partitioning the closed cross-section portion 3s of the frame 3 in the front-rear direction in cooperation with first partition walls 44, 45 of the peripheral wall 42.

## Description

### [Technical Field]

The present invention relates to a lower vehicle-body structure of a vehicle, particularly a lower vehicle-body structure including a frame constituting a closed cross-section portion extending in the front-rear direction on the vehicle-width-direction outer side of a floor panel, and a suspension housing provided to the frame.

### [Background Art]

To obtain excellent steering stability and preferable riding comfort during normal traveling, it is important for a lower vehicle-body structure of a vehicle to ensure rigidity against a load input from a suspension via a suspension housing (hereinafter also referred to as "sus housing") that supports the suspension.

With reference to such a lower vehicle-body structure of a vehicle, conventionally, there is a configuration in which a frame constituting a closed cross-section portion extending in the front-rear direction is provided on the vehicle-width-direction outer side of a floor panel, and a suspension housing is provided on the vehicle-width-direction outer side of the frame. Recently, there is also a known structure in which a suspension housing is provided on a frame, as in the case of Patent Literature 1.

However, in the configuration in which the suspension housing is provided on the frame, a cross section of the frame in the vehicle width direction, that is, a dimension in the width direction of the frame, is reduced at a position around the suspension housing and hence, there is a possibility of insufficient rigidity of the frame itself.

The suspension housing disclosed in Patent Literature 1 is an aluminum die-cast suspension housing having a high degree of freedom in shape, thus being capable of easily ensuring desired rigidity by providing a rib to the suspension housing itself, for example, leading to reinforcement of the frame. On the other hand, it can be also considered to use, for a suspension housing provided on a frame, a suspension housing made of sheet metal which has advantages, such as allowing easy manufacture by the conventional manufacturing process compared with an aluminum die-cast suspension housing. However, when the suspension housing is made of sheet metal, the degree of freedom in shape is lower than that of the aluminum die-cast suspension housing, and weight tends to be increased to ensure rigidity.

That is, in the configuration in which the suspension housing is provided on the frame, so that the cross section of the inside of the frame is reduced, when the suspension housing made of sheet metal is used which has a low degree of freedom in shape and which has a tendency to increase weight so as to ensure rigidity, there is a possibility that, during normal traveling, the frame cannot suppress angular displacement about the center axis when the frame is viewed in a front view, thus inducing inward falling deformation of the suspension housing. As a result, there is a possibility of steering stability or riding comfort being adversely affected.

### [Citation List]

### [Patent Literature]

[Patent Literature 1] Japanese Patent Laid-Open No. 2023-035561

### [Summary]

### [Problem to be Solved]

The present invention has been made in view of such a problem, and it is an object of the present invention to provide a lower vehicle-body structure of a vehicle that can obtain steering stability and/or riding comfort.

### [Means for Solving the Problem]

The invention is defined in claim 1. Particularly, a lower vehicle-body structure of a vehicle includes: a frame that constitutes a closed cross-section portion extending in a front-rear direction on a vehicle-width-direction outer side of a floor panel; and a suspension housing, which may be made of sheet metal. The suspension housing is provided to the frame, and supports a suspension. The suspension housing includes a damper mounting surface portion which may extends along an upper surface of the frame, and a peripheral wall extending downward from a peripheral edge of the damper mounting surface portion. One or more second partition walls are provided inward of the peripheral wall in a vehicle width direction. The second partition wall partitions the closed cross-section portion of the frame in the front-rear direction in cooperation with one or more first partition walls of the peripheral wall.

Partitioning the closed cross-section portion of the frame in the front-rear direction means partitioning the closed cross-sectional inner space of the frame into a front inner space and a rear inner space relative to the suspension housing. Partitioning the closed cross-section portion by the first partition walls and the second partition walls cooperating with each other is not limited to partitioning the closed cross-section portion in the front-rear direction without forming a gap, but includes partitioning the closed cross-section portion to the extent that the first partition walls and the second partition walls have a function of reinforcing the frame.

The first partition walls may be joint-shaped partition walls disposed in the closed cross-section portion, or may be partition walls each of which is formed by a portion of the frame constituting the closed cross-section portion.

With such a configuration, even when a load toward the vehicle-width-direction inner side is transmitted from the suspension housing during normal traveling, the first partition walls and the second partition walls constitute a virtual joint and hence, even with the configuration in which the suspension housing is provided on the frame, so that a cross section of the frame in the vehicle width direction is reduced at a position around the suspension housing, and the suspension housing is made of sheet metal, it is possible to suppress angular displacement of the frame about the center axis, thus suppressing the inward falling deformation of the suspension housing.

Accordingly, it is possible to obtain excellent steering stability and preferable riding comfort.

Note that angular displacement of the frame about the center axis when the frame is viewed in a front view indicates deformation in which an angle of the corner portion of the closed cross-section portion of the frame, that is, an inner corner portion, is increased or decreased when the frame is viewed in a cross-sectional view in the vehicle width direction, and indicates shear-deformation in which the frame is deformed in such a way as to be twisted about an axis extending in the front-rear direction.

The first partition walls may be fixed to the second partition walls. Particularly, the first partition wall may be fixed to the second partition wall.

With such a configuration, it is possible to properly partition the closed cross-section portion of the frame in the front-rear direction by the first partition walls and the second partition walls cooperating with each other and hence, it is possible to ensure rigidity necessary to suppress inward falling deformation of the suspension housing, and angular displacement of the frame about the center axis.

Each of the first partition walls may have a curved shape directing toward a vehicle-width-direction outer side as a distance toward a front side or a rear side from a fixation portion with respect to the respective second partition wall increases.

With such a configuration, it is possible to increase rigidity compared with the case in which the first partition walls are formed into a linear shape extending in the vehicle width direction.

The first partition walls may be disposed at a front part and a rear part of the peripheral wall in a state of forming a pair in the front-rear direction.

With such a configuration, it is possible to increase rigidity compared with the case in which only either one of the first partition walls forming the pair in the front-rear direction is provided.

A joint member extending in the vehicle width direction may be provided in the closed cross-section portion at a position that corresponds to a vehicle-width-direction inner side of the peripheral wall in the front-rear direction. Particularly, the joint member may include the second partition walls provided in such a way as to extend in the vehicle width direction at a front part and a rear part of the joint member in a state of forming a pair in the front-rear direction, and a connecting portion connecting the second partition walls forming the pair in the front-rear direction.

With such a configuration, it is possible to increase rigidity compared with the case in which only either one of the second partition walls forming the pair in the front-rear direction is provided. In addition, the second partition walls forming the pair in the front-rear direction are connected with each other via the connecting portion and hence, it is possible to increase rigidity compared with the case in which the second partition walls are provided independently.

Front-rear positions of the second partition walls may overlap with a front-rear position of an opening portion formed in the damper mounting surface portion in a penetrating manner in an up-down direction. In other words, positions in the front-rear direction of the second partition walls may overlap with a position in the front-rear direction of an opening portion formed in the damper mounting surface portion in a penetrating manner in an up-down direction.

With such a configuration, a load from the suspension is input toward the vehicle-width-direction inner side from the opening portion of the damper mounting surface portion, which is the center of the mounting position of the damper, and hence, the second partition walls can be provided at positions as close as possible to an input source of load.

Accordingly, it is possible to effectively suppress inward falling deformation of the suspension housing, and angular displacement of the frame about the center axis when the frame is viewed in a front view.

The frame, particularly the frame disposed adjacent to the suspension housing may include a lower portion having a U shape that is open upward in cross section in the vehicle width direction, and an upper portion located above the lower portion and constituting the closed cross-section portion in cooperation with the lower portion. Particularly, an outer side wall of the lower portion may include a first part extending upward from a lower wall of the lower portion, and a second part further inclined outward in the vehicle width direction as a distance from an upper end of the first part increases above the first part. Further particularly, the peripheral wall may be fixed to the first part and the second part.

With such a configuration, the closed cross section of the frame is increased toward the vehicle-width-direction outer side and hence, it is possible to support the suspension housing whereas rigidity of the frame is ensured.

### [Effect of Invention]

According to the present invention, it is possible to provide a lower vehicle-body structure of a vehicle that can suppress inward falling deformation of the suspension housing, thus obtaining excellent steering stability and preferable riding comfort even with the configuration in which the suspension housing is provided on the frame, so that a cross section of the frame in the vehicle width direction is reduced at a position around the suspension housing, and the suspension housing is made of sheet metal.

### [Brief Description of Drawings]

FIG. 1 is a perspective cross-sectional view of a lower vehicle-body structure of the present embodiment as viewed from a trunk side.
FIG. 2 is an enlarged cross-sectional view showing a main part taken along line A-A in FIG. 1.
FIG. 3 is a perspective cross-sectional view taken along line B-B in FIG. 2, as viewed from above.
FIG. 4 is an enlarged view of a main part of a suspension housing and an area around the suspension housing with a portion of a rear frame shown in FIG. 1 omitted.
FIG. 5 is an enlarged cross-sectional view taken along line C-C in FIG. 4.
FIG. 6 is an enlarged cross-sectional view taken along line D-D in FIG. 4.
FIG. 7 is an end view showing a main part taken along line D-D in FIG. 4.
FIG. 8 is an enlarged cross-sectional view showing a main part taken along line E-E in FIG. 4.
FIG. 9 is an enlarged cross-sectional view showing a main part taken along line G-G in FIG. 4.
FIG. 10(a) is a diagram as viewed in the direction of arrow Da in FIG. 4, and FIG. 10(b) is an enlarged cross-sectional view taken along line H-H in FIG. 10(a).

### [Embodiment for Carrying Out the Invention]

One embodiment of the present invention will be described in detail hereinafter with reference to drawings.

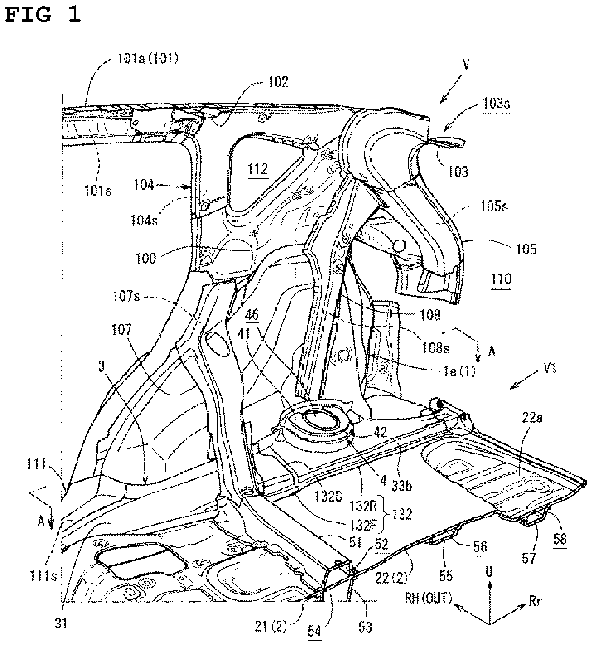

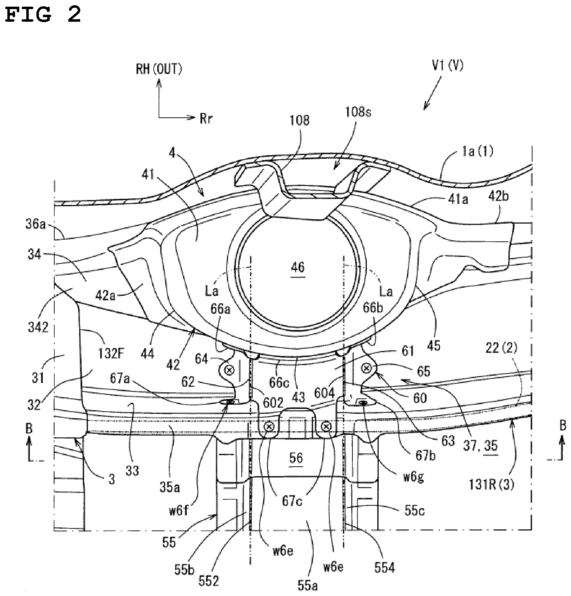

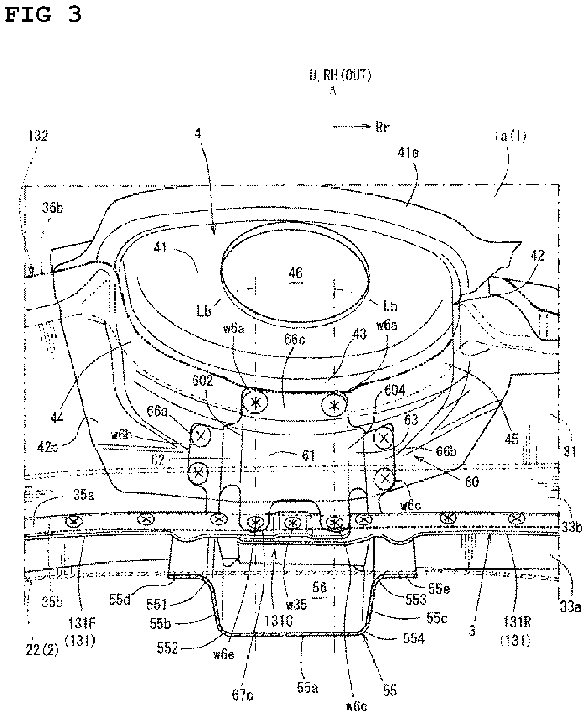

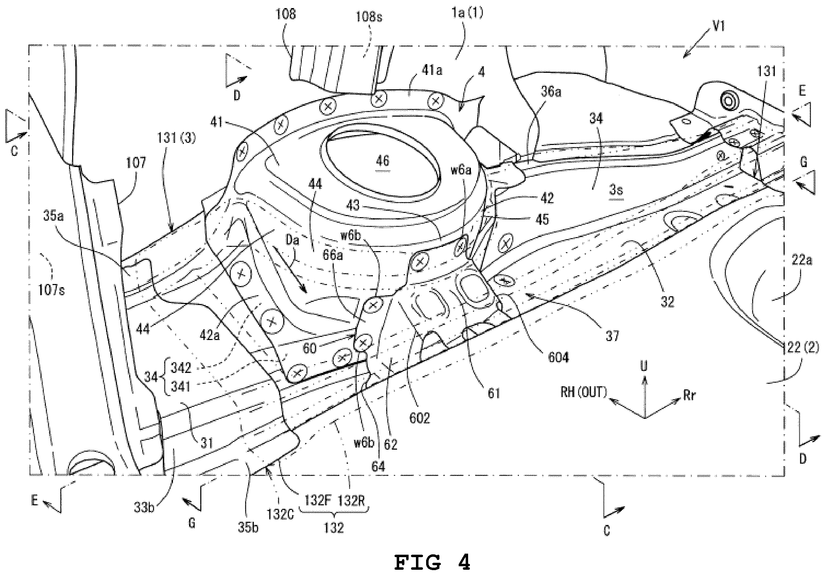

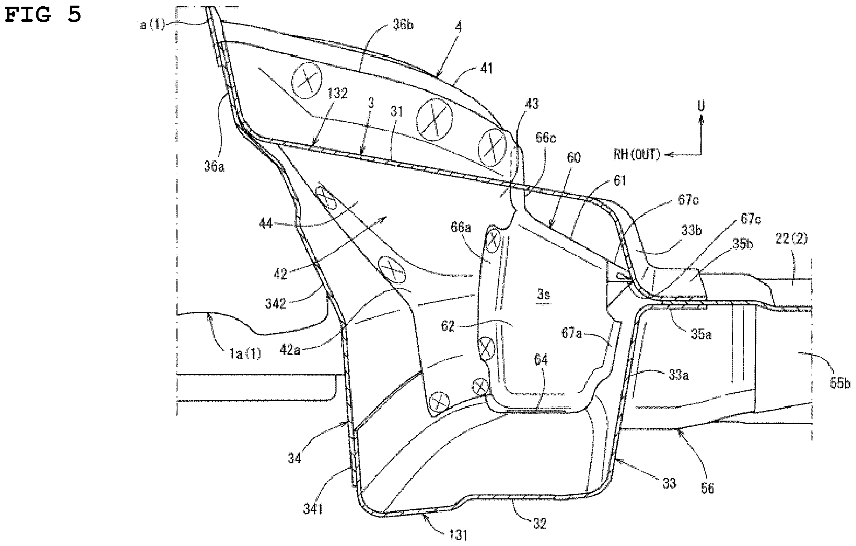

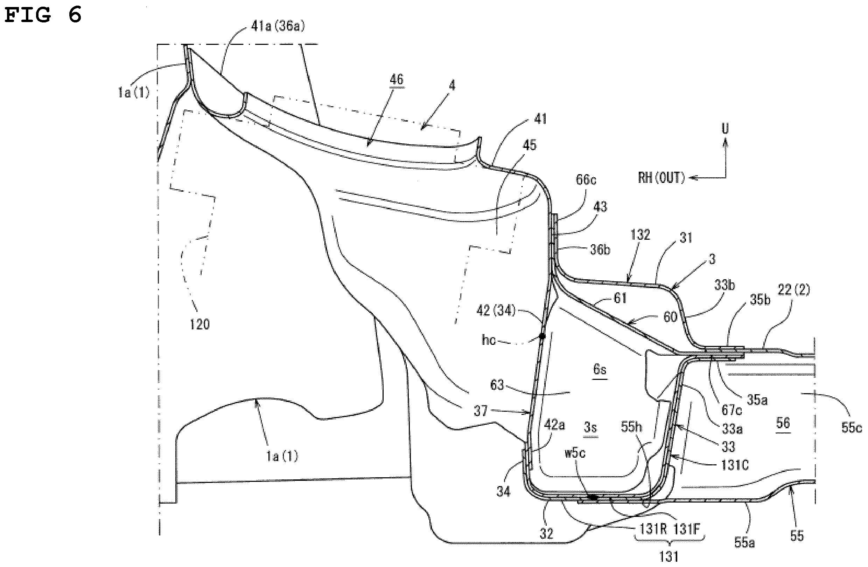

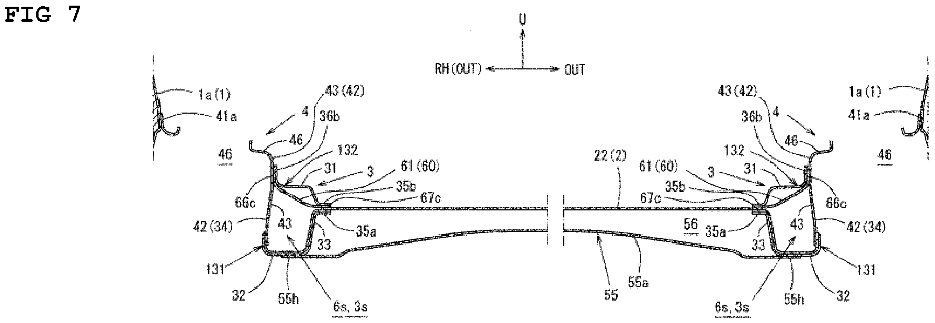

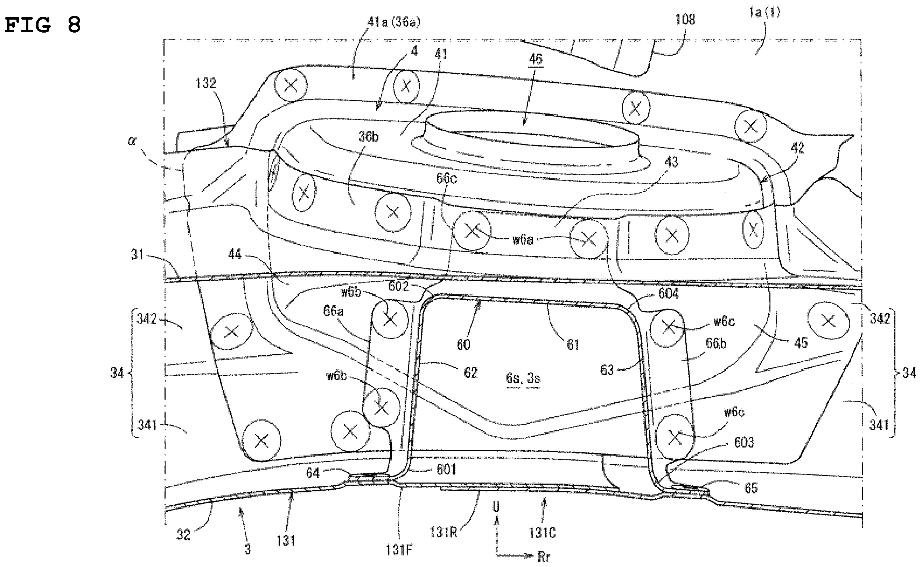

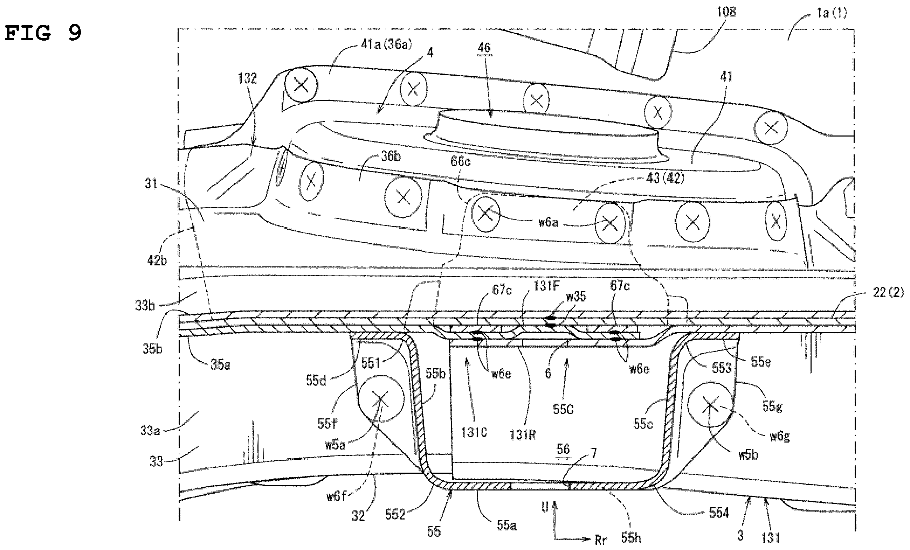

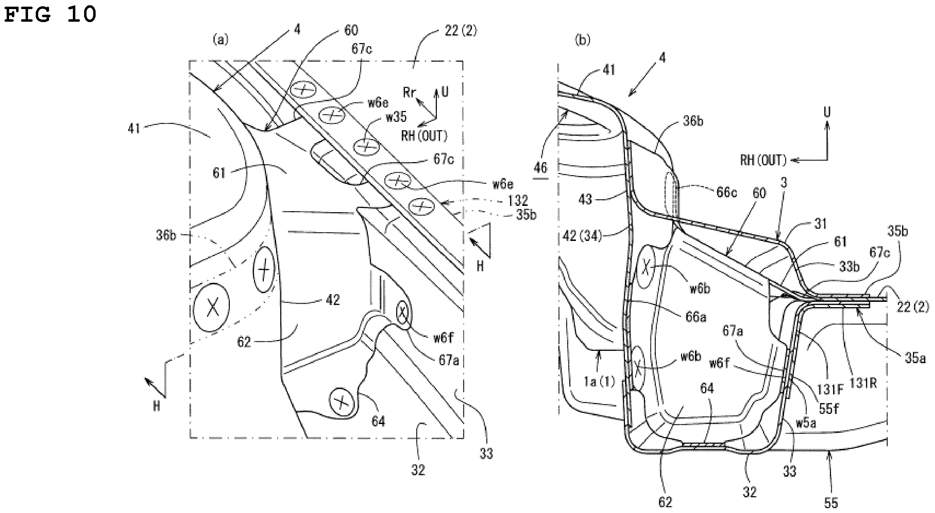

The drawings show a lower vehicle-body structure V1 of an automobile of the present embodiment. FIG. 1 is a perspective cross-sectional view of a vehicle body rear portion V including the lower vehicle-body structure V1, taken along the front-rear direction at the intermediate position in the vehicle width direction, and as viewed from the trunk side. FIG. 2 is an enlarged cross-sectional view showing a main part taken along line A-A in FIG. 1, with an upper rear member 132R of a rear frame 3 (see FIG. 1) and a rear floor panel 2 (see FIG. 1) omitted. FIG. 3 is a perspective cross-sectional view taken along line B-B in FIG. 2, as viewed from above. FIG. 4 is an enlarged view of a main part of a suspension housing 4 and an area around the suspension housing 4 with the upper rear member 132R shown in FIG. 1 omitted. FIG. 5 is an enlarged cross-sectional view taken along line C-C in FIG. 4. FIG. 6 is an enlarged cross-sectional view taken along line D-D in FIG. 4. FIG. 7 is an end view showing a main part taken along line D-D in FIG. 4. FIG. 8 is an enlarged cross-sectional view showing a main part taken along line E-E in FIG. 4. FIG. 9 is an enlarged cross-sectional view showing a main part taken along line G-G in FIG. 4. FIG. 10(a) is a diagram as viewed in the direction of arrow Da in FIG. 4. FIG. 10(b) is an enlarged cross-sectional view taken along line H-H in FIG. 10 (a).

In the drawings, an arrow Rr indicates the rear side of the vehicle body, an arrow U indicates the upper side of the vehicle body, an arrow RH indicates the right side of the vehicle body, and an arrow OUT indicates the vehicle-width-direction outer side. In the description made hereinafter, respective directions, that is, the front direction, the rear direction, the left direction, the right direction, the upward direction, and the downward direction, indicate the respective directions of the vehicle body, that is, the front direction, the rear direction, the left direction, the right direction, the upward direction, and the downward direction of the vehicle body unless otherwise specifically indicated, and the above-mentioned respective directions of the vehicle body are based on the occupant seated on the driver's seat.

The lower vehicle-body structure V1 of an automobile of the present embodiment may have a substantially bilaterally symmetric shape and hence, the description will be made based on the configuration of the vehicle body on the right side unless otherwise specifically indicated. In the drawings, a "cross" mark indicates a main spot welded portion, and a "circle" mark surrounding the "cross" mark indicates a welding range. In addition, reinforcement may be abbreviated as rein in the following description.

For example, the lower vehicle-body structure V1 of an automobile of the present embodiment is applied to the vehicle body rear portion V. Prior to the description of the lower vehicle-body structure V1, the structure of the region above and around the lower vehicle-body structure V1 in the vehicle body rear portion V will be described.

As shown in FIG. 1, the region above and around the lower vehicle-body structure V1 of the present embodiment may include a side panel 100, a roof side rail 101, a roof reinforcement 102, a rear header reinforcement 103, an intermediate pillar 104, a rear pillar 105, front and rear brace members 107, 108, and the like.

The side panel 100 is located above a wheel well inner (or a wheel housing inner) 1a described later, and forms the side wall of a trunk at the vehicle body rear portion V in cooperation with the wheel well inner 1a. The lower edge of the side panel 100 is joined to the upper edge of the wheel well inner 1a.

The roof side rail 101 may include a roof side rail inner 101a and a roof side rail outer not shown in the drawing, thus constituting a closed cross-section portion 101s extending in the front-rear direction of the vehicle at each end portion of a roof portion in the vehicle width direction, the roof portion forming the top surface of a vehicle cabin of the vehicle body.

The roof reinforcement 102 extends between the left and right roof side rails 101, and is joined to the lower surface of a roof panel in such a way as to be capable of supporting the roof panel of the roof portion. The roof panel extends in the vehicle width direction and the front-rear direction, and has a plate shape.

The rear header reinforcement 103 may constitute a closed cross-section portion 103s at the rear edge of the roof portion in cooperation with the rear end portion of the roof panel. For example, the closed cross-section portion 103s extends in the vehicle width direction. The rear header reinforcement 103 forms the upper edge of a rear trunk opening portion 110 that is open from the trunk side toward the rear side of the vehicle body.

The intermediate pillar 104 (or C pillar) may constitute a closed cross-section portion 104s extending in the up-down direction of the vehicle body. The intermediate pillar 10 connects the rear portion of the roof side rail 101 with the rear portion of a side sill 111.

The side sill 111 may be a vehicle body reinforcing member constituting a closed cross-section portion Ills extending in the front-rear direction on each of both the left and right end portions of a front floor panel not shown in the drawing and forming the floor surface of the vehicle cabin. The upper portion of the intermediate pillar 104 may constitute the front edge of a quarter window opening portion 112.

The intermediate pillar 104 may be disposed such that the intermediate portion of the intermediate pillar 104 in the up-down direction is located at the front edge portion of the side panel 100. The lower portion of the intermediate pillar 104 is located at the front edge portion of a rear wheel well (or a rear wheel housing) 1.

The rear pillar 105 (or D pillar) constitutes a closed cross-section portion 105s extending obliquely from the outer end in the vehicle width direction of the rear header reinforcement 103 toward the rear side as it goes downward so as to form the side edge of the rear trunk opening portion 110. The upper portion of the rear pillar 105 is joined to the rear edge of the side panel 100.

For example, both of the front and rear brace members 107, 108 are joined to the side panel 100 from the trunk side. Of the front and rear brace members 107, 108, the front brace member 107 may constitute a closed cross-section portion 107s extending in the up-down direction in such a way as to connect the lower portion of the intermediate pillar 104 with the outer edge in the vehicle width direction of a cross member upper portion 51 described later. Of the front and rear brace members 107, 108, the rear brace member 108 may constitute a closed cross-section portion 108s extending in the up-down direction in such a way as to connect the upper end portion of the rear pillar 105 with the portion of the wheel well inner 1a located directly above the suspension housing 4 described later.

Next, the lower vehicle-body structure V1 of an automobile of the present embodiment will be described.

As shown in FIG. 1 to FIG. 10, particularly in FIG. 1, the lower vehicle-body structure V1 of an automobile of the present embodiment includes the rear wheel well 1, the rear floor panel 2, the rear frame 3, the suspension housing 4, one or a plurality of rear cross members 51, 53, 55, 57, and the like.

The rear wheel well 1 may be provided directly below the side panel 100, and formed into an arch shape in which the intermediate part in the front-rear direction projects upward so as to allow housing of a rear wheel when the vehicle is viewed in a side view. For example, the rear wheel well 1 includes a wheel well outer (or a wheel housing outer) not shown in the drawing and the wheel well inner 1a. Particularly, the wheel well outer protrudes outward in the vehicle width direction, and the wheel well inner 1a protrudes inward in the vehicle width direction. The peripheral edge portion of the wheel well inner 1a, excluding the lower end portion thereof, is joined to the peripheral edge portion of the wheel well outer, excluding the lower end portion thereof.

The rear floor panel 2 may be configured such that a rear seat pan 21 and a rear floor pan 22 are disposed on the front part and the rear part of the rear floor panel 2, thus forming an integral body or being integrally and continuously provided.

The rear seat pan 21 may be a rear floor provided at the front part for mounting a rear seat (rear-side seat) on the upper portion thereof. The above-described rear floor pan 22 is a rear floor provided at the rear part for forming a trunk floor. A trunk recessed portion 22a is recessed and formed at the rear portion of the rear floor pan 22.

As shown in FIG. 1, FIG. 7, and the like, the rear frames 3 are provided on both the left and right sides of the rear floor panel 2, and extend in the front-rear direction.

As shown in FIG. 1, the front end portions of the above-described rear frames 3 are provided in such a way as to overlap with the rear end portions of the side sills 111, provided on both the left and right sides of the front floor panel not shown in the drawing. In contrast, a rear bumper reinforcement not shown in the drawing and extending in the vehicle width direction may be connected to the rear end portions of the left and right rear frames 3 in such a way as to be able to absorb impact energy in a rear-end collision.

As shown in FIG. 5, and the like, the rear frame 3 includes an upper wall 31, a lower wall 32, an inner wall 33, and an outer wall 34. The upper wall 31 forms the upper surface of the rear frame 3 in the vehicle width direction. The lower wall 32 forms the lower surface of the rear frame 3 in the vehicle width direction. The inner wall 33 vertically joins the inner end in the vehicle width direction of the upper wall 31 and the inner end in the vehicle width direction of the lower wall 32 together. The outer wall 34 vertically joins the outer end in the vehicle width direction of the upper wall 31 and the outer end in the vehicle width direction of the lower wall 32 together.

The rear frame 3 includes a rear frame lower portion 131 and a rear frame upper portion 132. The rear frame lower portion 131 is open upward in cross section in the vehicle width direction. The rear frame upper portion 132 closes the opening of the rear frame lower portion 131 from above.

For example, the rear frame lower portion 131 is formed of the outer wall 34, the lower wall 32, an inner wall body portion 33a, which is a portion of the inner wall 33 that excludes the upper portion, a lower inner edge flange portion 35a, and a lower outer edge flange portion 36a. The rear frame lower portion 131 may be formed as an integral body by press forming steel sheets.

Particularly, the lower inner edge flange portion 35a is formed in such a way as to substantially horizontally project inward in the vehicle width direction from the upper end of the inner wall body portion 33a. Further particularly, the lower outer edge flange portion 36a is formed in such a way as to project upward from the upper end of the outer wall 34.

For example, the rear frame upper portion 132 is formed of the upper wall 31, an inner wall upper portion 33b corresponding to the upper portion of the inner wall 33, an upper inner edge flange portion 35b, and an upper outer edge flange portion 36b. The rear frame upper portion 132 may be formed as an integral body by press forming a steel sheet.

Particularly, the upper inner edge flange portion 35b is formed in such a way as to substantially horizontally project inward in the vehicle width direction from the lower end of the inner wall upper portion 33b. Further particularly, the upper outer edge flange portion 36b is formed in such a way as to project upward from the outer edge in the vehicle width direction of the upper wall 31.

The rear frame lower portion 131 and the rear frame upper portion 132 may be spot welded in a state in which the lower inner edge flange portion 35a and the upper inner edge flange portion 35b are superimposed on each other in the up-down direction, and in a state in which the upper outer edge flange portion 36b and the lower outer edge flange portion 36a are superimposed on each other in the vehicle width direction.

Consequently, the rear frame lower portion 131 and the rear frame upper portion 132 of the rear frame 3 constitute, in cooperation, a closed cross-section portion 3s extending in the front-rear direction, that is, constitute an inner space having a closed cross-sectional shape.

In constituting the closed cross-section portion 3s, as shown in FIG. 3 and FIG. 9, the upper inner edge flange portion 35b and the lower inner edge flange portion 35a of the rear frame lower portion 131 are superimposed on each other in a state of clamping the outer end in the vehicle width direction of the rear floor pan 22 from above and below, and these three sheets are joined together e.g., by spot welding. As shown in FIG. 3, a plurality of spot welded portions w35 are formed in the front-rear direction, these three sheets being superimposed on each other at the spot welded portions w35. Consequently, both end portions of the rear floor pan 22 in the vehicle width direction are connected to the left and right rear frames 3.

For example, as shown in FIG. 1 and FIG. 4, the rear frame 3 extends in the front-rear direction such that the middle portion of the rear frame 3 in the front-rear direction is disposed adjacent to the vehicle-width-direction inner side of the wheel well inner 1a having a vertical wall shape. As shown in FIG. 5, the lower outer edge flange portion 36a is joined e.g., by spot welding or the like to the wheel well inner 1a from the inner side in the vehicle width direction at this middle portion. Particularly, the upper outer edge flange portion 36b is joined to the lower outer edge flange portion 36a from the inner side in the vehicle width direction.

As shown in FIG. 1 and FIG. 4, the rear frame upper portion 132 of the rear frame 3 may include, as components thereof, an upper front member 132F and the upper rear member 132R at the front and rear part thereof. A connected portion between the rear portion of the upper front member 132F and the front portion of the upper rear member 132R forms a superimposed and connected part 132C at which the upper front member 132F and the upper rear member 132R are joined together in a state of being superimposed on each other in the front-rear direction.

In the same manner, as shown in FIG. 3, FIG. 4, FIG. 8, and FIG. 9, the rear frame lower portion 131 of the rear frame 3 may include, as components thereof, a lower front member 131F and a lower rear member 131R at the front and rear part thereof. A connected portion between the rear portion of the lower front member 131F and the front portion of the lower rear member 131R forms a superimposed and connected part 131C at which the lower front member 131F and the lower rear member 131R are joined together in a state of being superimposed on each other in the front-rear direction. The superimposed and connected part 132C is located forward of the superimposed and connected part 131C.

In the present embodiment, as shown in FIG. 3, and the like, at the superimposed and connected part 131C, the front portion of the lower rear member 131R may be disposed in such a way as to be superimposed on the rear portion of the lower front member 131F from below.

As shown in FIG. 1 and FIG. 4, the suspension housing 4 (or "sus housing 4") is provided to the rear frame 3. As shown in FIG. 6, the suspension housing 4 is a damper support portion that supports the upper end portion of a rear suspension damper 120 including a damper spring. The suspension housing 4 includes a damper mounting surface portion 41 and a peripheral wall 42. Particularly, the suspension housing 4 is made of sheet metal.

For example, the suspension housing 4 is provided to the rear frame 3 adjacent to the vehicle-width-direction inner side of the wheel well inner 1a. Particularly, the upper portion of the suspension housing 4 rises stepwise relative to the upper surface of the rear frame 3 located around the suspension housing 4, thus forming a portion of the upper surface of the rear frame 3.

The configurations of the suspension housing 4 and the peripheral part of the suspension housing 4 described above will be described later.

As shown in FIG. 1, the plurality of rear cross members 51, 53, 55, 57 described above include front rear-cross members 51, 53 disposed forward of the suspension housing 4, an intermediate rear cross member 55 located at the same front-rear position (or position in the front-rear direction of the vehicle) as the suspension housing 4, and a rear rear-cross member 57 disposed rearward of the suspension housing 4, and are disposed at intervals in the front-rear direction.

For example, the front rear-cross members 51, 53 include the cross member upper portion 51 (so-called No.4 cross member upper portion) and the cross member lower portion 53 (so-called No.4 cross member lower portion).

The cross member upper portion 51 may be constituted to have a hat shape that is open downward in cross section in the front-rear direction. The cross member lower portion 53 may be constituted to have a hat shape that is open upward in cross section in the front-rear direction.

The cross member upper portion 51 and the cross member lower portion 53 are joined to the boundary portion between the rear seat pan 21 and the rear floor pan 22 in a state of clamping the boundary portion from above and below. Closed cross-section portions 52, 54 extending in the vehicle width direction are constituted between the cross member upper portion 51 and the boundary portion and between the cross member lower portion 53 and the boundary portion. Particularly, both end portions in the width direction of the cross member upper portion 51 and the cross member lower portion 53 are connected to the corresponding left and right rear frames 3.

As shown in FIG. 1, both the intermediate rear cross member 55 and the rear rear-cross member 57 may be constituted to have a hat shape that is open upward in cross section in the front-rear direction, and are joined to the rear floor pan 22 from below, thus constituting closed cross-section portions 56, 58 between the intermediate rear cross member 55 and the rear floor pan 22 and between the rear rear-cross member 57 and the rear floor pan 22, the closed cross-section portions 56, 58 extending in the vehicle width direction. In addition, both the intermediate rear cross member 55 and the rear rear-cross member 57 extend in the width direction at positions below the rear floor pan 22. Particularly, both end portions of the intermediate rear cross member 55 and the rear rear-cross member 57 in the width direction are connected to the corresponding left and right rear frames 3.

As shown in FIG. 3, FIG. 6, FIG. 7, and FIG. 9, the intermediate rear cross member 55 may be provided at the same front-rear position as the superimposed and connected part 131C at which the rear end portion of the lower front member 131F of the rear frame 3 and the front end portion of the lower rear member 131R of the rear frame 3 are connected in a state of being superimposed on each other in the front-rear direction.

The configuration of the intermediate rear cross member 55 will be described in more detail.

For example, as shown in FIG. 3 and FIG. 9, the intermediate rear cross member 55 includes a lower wall 55a, a front wall 55b and a rear wall 55c, a front edge flange portion 55d, and a rear edge flange portion 55e. Particularly, the front wall 55b and the rear wall 55c extend upward from both the front and rear ends of the lower wall 55a. Further particularly, the front edge flange portion 55d extends forward from the upper end of the front wall 55b. Further particularly, the rear edge flange portion 55e extends rearward from the upper end of the rear wall 55c. The intermediate rear cross member 55 is constituted to have a hat shape having an upper opening in cross section in the front-rear direction.

As shown in FIG. 1, the front edge flange portion 55d and the rear edge flange portion 55e of the intermediate rear cross member 55, excluding both end portions thereof in the vehicle width direction, may be joined to the rear floor pan 22 from below. Consequently, the closed cross-section portion 56 linearly extending in the vehicle width direction is constituted between the intermediate rear cross member 55 and the rear floor pan 22.

As shown in FIG. 3 and FIG. 9, in the intermediate rear cross member 55, a ridge extending linearly in the vehicle width direction may be formed at each of the corner portion between the front wall 55b and the front edge flange portion 55d, the corner portion between the front wall 55b and the lower wall 55a, the corner portion between the rear wall 55c and the rear edge flange portion 55e, and the corner portion between the rear wall 55c and the lower wall 55a. The plurality of ridges are taken as a front upper ridge 551, a front lower ridge 552, a rear upper ridge 553, and a rear lower ridge 554 in the order of the corner portions described above.

In addition, as shown in FIG. 6, FIG. 7, and FIG. 9, front outer edge flange portions 55f, rear outer edge flange portions 55g, and lower outer edge flange portions 55h may be provided to both end portions of the intermediate rear cross member 55 in the vehicle width direction.

For example, as shown in FIG. 9, the front outer edge flange portions 55f are formed in such a way as to project forward relative to the front wall 55b and to project downward relative to the front edge flange portion 55d at both end portions of the intermediate rear cross member 55 in the vehicle width direction, and are spot welded to the inner walls 33 of the rear frames 3.

Particularly, the rear outer edge flange portions 55g are formed in such a way as to project rearward relative to the rear wall 55c and to project downward relative to the rear edge flange portion 55e at both end portions of the intermediate rear cross member 55 in the vehicle width direction, and are spot welded to the inner walls 33 of the rear frames 3.

Further particularly, as shown in FIG. 6 and FIG. 7, the lower outer edge flange portions 55h are formed in such a way as to project outward in the vehicle width direction relative to the lower wall 55a at both end portions of the intermediate rear cross member 55 in the vehicle width direction, and are spot welded to the lower walls 32 of the superimposed and connected parts 131C of the rear frames 3. Thus, both end portions of the intermediate rear cross member 55 in the width direction are connected to the corresponding left and right rear frames 3 as described above.

Of the "cross" marks in FIG. 9, the "cross" marks relating to the intermediate rear cross member 55 show spot welded portions at which the intermediate rear cross member 55 is spot welded to the rear frame 3. Of the plurality of spot welded portions, a spot welded portion at the front outer edge flange portion 55f of the intermediate rear cross member 55 is taken as a front outer fixation portion w5a, and a spot welded portion at the rear outer edge flange portion 55g of the intermediate rear cross member 55 is taken as a rear outer fixation portion w5b. As shown in FIG. 6, a spot welded portion at the lower outer edge flange portion 55h of the intermediate rear cross member 55 is taken as a lower outer fixation portion w5c.

The configurations of the suspension housing 4 and the peripheral part of the suspension housing 4, as a continuation, will be described in detail.

As described above, the suspension housing 4 includes the damper mounting surface portion 41 and the peripheral wall 42 (see FIG. 2 to FIG. 5, FIG. 6, FIG. 8, and FIG. 9).

The damper mounting surface portion 41 corresponds to the upper surface of the suspension housing 4, and may be formed into a flat plate shape extending along the upper surface of the rear frame 3. An opening portion 46 is formed at the center portion of the damper mounting surface portion 41, as viewed in a plan view, in a penetrating manner in the up-down direction.

The rear suspension damper 120 (see FIG. 6) is mounted at the peripheral edge of the opening portion 46 of the damper mounting surface portion 41 from the lower surface side e.g., in a state in which the top portion, that is, a damper top, projects upward from the opening portion 46. As shown in FIG. 6, the damper mounting surface portion 41 may be formed into an inclined surface shape that is substantially linearly inclined downward toward the vehicle-width-direction inner side. With such a shape, the rear suspension damper 120 is attached to the damper mounting surface portion 41 in an attitude in which the rear suspension damper 120 is slightly inclined downward toward the vehicle-width-direction outer side. For this reason, due to vertical displacement of the suspension during normal traveling, not only a load in the up-down direction but also a load toward the vehicle-width-direction inner side are input to the vehicle body from the rear suspension.

As shown in FIG. 3, FIG. 5, and FIG. 6, the peripheral wall 42 may be formed into a plate shape that extends downward from the peripheral edge of the damper mounting surface portion 41 located above the peripheral wall 42, that is, formed into a vertical wall shape, excluding the edge portion on the vehicle-width-direction outer side. As shown in FIG. 3 and the like, the peripheral wall 42 may include a peripheral wall inner portion 43. The peripheral wall 42 includes one or more first partition walls, particularly a front first partition wall 44 and a rear first partition wall 45.

The peripheral wall inner portion 43 is located on the vehicle-width-direction inner side. Particularly, the front first partition wall 44 is located forward relative to the peripheral wall inner portion 43. Further particularly, the rear first partition wall 45 is located rearward relative to the peripheral wall inner portion 43.

The front first partition wall 44 and the rear first partition wall 45 are disposed so as to form a pair in the front-rear direction with the peripheral wall inner portion 43 interposed therebetween. The front first partition wall 44 may have a curved shape to form the front surface of the peripheral wall 42.

Particularly, the curved shape directs toward the vehicle-width-direction outer side as a distance from the peripheral wall inner portion 43 toward the front side increases. In other words, the front first partition wall 44 may extend outward and forward from the peripheral wall inner portion 43.

The rear first partition wall 45 may have a curved shape to form the rear surface of the peripheral wall 42. Particularly, the curved shape directing toward the vehicle-width-direction outer side as a distance from the peripheral wall inner portion 43 toward the rear side increases. In other words, the rear first partition wall 45 may extend outward and rearward from the peripheral wall inner portion 43.

Consequently, as shown in FIG. 5 and FIG. 6, the peripheral wall 42 is formed into a curved surface shape that, as viewed in a plan view, bulges into a substantially semi-circular arc shape toward the closed cross-section portion 3s (inner space) of the rear frame 3, relative to the part of the outer wall 34 of the rear frame 3 adjacent to the suspension housing 4 in the front-rear direction. The peripheral wall 42 that is formed to bulge toward the closed cross-section portion 3s in this manner also serves as at least a portion of a part of the outer wall 34 of the rear frame 3, the part corresponding to the suspension housing 4 in the front-rear direction.

In contrast, as shown in FIG. 5 and FIG. 8, the part of the outer wall 34 of the rear frame 3 adjacent to the suspension housing 4 in the front-rear direction includes an outer wall lower portion 341 and an outer wall upper portion 342. Particularly, the outer wall lower portion 341 extends substantially vertically upward from the lower wall 55a of the rear frame 3. Further particularly, the outer wall upper portion 342 is further inclined outward in the vehicle width direction as a distance from the upper end of a first part toward the upper side increases.

To be more specific, as shown in FIG. 6, the part of the outer wall 34 of the rear frame 3 which corresponds to the suspension housing 4 has a shape locally recessed inward in the vehicle width direction relative to the part of the outer wall adjacent to the suspension housing 4 in the front-rear direction as the peripheral wall 42. Therefore, at the part of the rear frame 3 adjacent to the vehicle-width-direction inner side of the suspension housing 4, a narrow width portion 37 is constituted in which a dimension in the width direction of the closed cross-section portion 3s of the rear frame 3 is reduced compared with the part of the rear frame 3 adjacent to the suspension housing 4 in the front-rear direction.

As shown in FIG. 6, a lower edge 42a of the peripheral wall 42 of the suspension housing 4 is joined and fixed e.g., by spot welding to the lower portion of the outer wall 34 from the inner side in the vehicle-width-direction. Particularly, the outer wall 34 rises upward from the outer end in the vehicle width direction of the lower wall 32 of the rear frame lower portion 131, thus having a flange shape.

As shown in FIG. 6, an outer edge flange portion 41a may be formed at each of the outer end in the vehicle width direction of the damper mounting surface portion 41 of the suspension housing 4 and the outer end in the vehicle width direction of the peripheral wall 42 of the suspension housing 4. As shown in FIG. 4, the outer edge flange portion 41a of the damper mounting surface portion 41 and the outer edge flange portion 41a of the peripheral wall 42 are joined e.g., by spot welding to the wheel well inner 1a, having a vertical wall shape, from the inner side in the vehicle width direction. Consequently, the suspension housing 4 is provided adjacent to the vehicle-width-direction inner side of the wheel well inner 1a so as to form a portion of the rear frame 3.

As shown in FIG. 5, FIG. 6, FIG. 8, and FIG. 9, at the front-rear position of the rear frame 3 which corresponds to the suspension housing 4, the outer edge flange portion 36b is joined e.g., by spot welding or the like along the upper portion of the peripheral wall 42, thus forming a portion of the peripheral wall 42. Particularly, the outer edge flange portion 36b is located on the vehicle-width-direction outer side of the rear frame upper portion 132.

As shown in FIG. 2 to FIG. 6, and FIG. 8, the lower vehicle-body structure V1 of an automobile of the present embodiment may further include a joint member 60 in the closed cross-section portion 3s at the narrow width portion 37 of the rear frame 3. Particularly, the joint member 60 serves as a load transmission portion that connects the suspension housing 4 with the intermediate rear cross member 55.

For example, as shown in FIG. 8, and the like, the joint member 60 includes a connecting surface portion 61, a front second partition wall 62, a rear second partition wall 63, a front edge flange portion 64, and a rear edge flange portion 65. Particularly, the connecting surface portion 61 serves as an upper wall (upper surface portion). Further particularly, the front second partition wall 62 serves as a front wall extending downward from the front end of the connecting surface portion 61. Further particularly, the rear second partition wall 63 serves as a rear wall extending downward from the rear end of the connecting surface portion 61. Accordingly, the joint member 60 substantially has a box shape.

Further particularly, the front edge flange portion 64 extends forward from the lower end of the front second partition wall 62. Further particularly, the rear edge flange portion 65 extends rearward from the lower end of the rear second partition wall 63. The joint member 60 may be constituted to have a hat shape having a lower opening in cross section in the front-rear direction.

For example, the front edge flange portion 64 and the rear edge flange portion 65 of the joint member 60 are joined to the lower wall 32 of the rear frame 3 from above such that the lower opening is closed by the lower wall 32 of the rear frame 3, so that a closed cross-section portion 6s linearly extending in the vehicle width direction is constituted between the joint member 60 and the lower wall 32 of the rear frame 3.

Further particularly, in the joint member 60, a ridge extending linearly in the vehicle width direction is formed at each of the corner portion between the front second partition wall 62 and the front edge flange portion 64, the corner portion between the front second partition wall 62 and the connecting surface portion 61, the corner portion between the rear second partition wall 63 and the rear edge flange portion 65, and the corner portion between the rear second partition wall 63 and the connecting surface portion 61. The plurality of ridges are taken as a front lower ridge 601, a front upper ridge 602, a rear lower ridge 603, and a rear upper ridge 604 in the order of the corner portions described above.

As shown in FIG. 2, the front-rear positions of the front lower ridge 552 and the rear lower ridge 554 of the intermediate rear cross member 55 described above may overlap with the front-rear position of the joint member 60. Particularly, in the present embodiment, as shown by virtual straight lines La in FIG. 2, the front-rear position of the front lower ridge 552 of the intermediate rear cross member 55 overlaps with the front-rear position of the front upper ridge 602 of the joint member 60, and the front-rear position of the rear lower ridge 554 of the intermediate rear cross member 55 overlaps with the front-rear position of the rear upper ridge 604 of the joint member 60.

As shown in FIG. 3 and FIG. 8, a front outer edge flange portion 66a, a rear outer edge flange portion 66b, and an upper outer edge flange portion 66c may be provided to the outer edge of the joint member 60 in the vehicle width direction.

The front outer edge flange portion 66a is formed in such a way as to project forward relative to the front second partition wall 62 at the outer end portion in the vehicle width direction of the joint member 60, and is joined and fixed e.g., by spot welding to the vehicle-width-direction inner part of the front first partition wall 44 of the peripheral wall 42 in a state of being superimposed from the inner side in the vehicle width direction. The rear outer edge flange portion 66b is formed in such a way as to project rearward relative to the rear second partition wall 63 at the outer end portion in the vehicle width direction of the joint member 60, and is joined and fixed e.g., by spot welding to the vehicle-width-direction inner part of the rear first partition wall 45 of the peripheral wall 42 in a state of being superimposed from the inner side in the vehicle width direction.

The upper outer edge flange portion 66c is formed in such a way as to project upward from the outer end portion in the vehicle width direction of the connecting surface portion 61 of the joint member 60, and is joined and fixed e.g., by spot welding to the peripheral wall inner portion 43 of the peripheral wall 42 in a state of being superimposed from the inner side in the vehicle width direction.

For example, as shown in FIG. 2, a front inner edge flange portion 67a, a rear inner edge flange portion 67b, and upper inner edge flange portions 67c are provided to the inner edge of the joint member 60 in the vehicle width direction.

As shown in FIG. 2 and FIG. 5, the front inner edge flange portion 67a is formed in such a way as to project forward relative to the front second partition wall 62 at the inner end portion in the vehicle width direction of the joint member 60, and is joined and fixed e.g., by spot welding to the inner wall 33 of the rear frame 3 in a state of being superimposed from the outer side in the vehicle width direction. As shown in FIG. 2, the rear inner edge flange portion 67b is formed in such a way as to project rearward relative to the rear second partition wall 63 at the inner end portion in the vehicle width direction of the joint member 60, and is joined and fixed e.g., by spot welding to the inner wall 33 of the rear frame 3 in a state of being superimposed from the outer side in the vehicle width direction.

As shown in FIG. 2 and FIG. 3, the front and rear upper inner edge flange portions 67c form a pair of upper inner edge flange portions that project inward in the vehicle width direction from the inner end portion in the vehicle width direction of the connecting surface portion 61 of the joint member 60, and both of the front and rear upper inner edge flange portions 67c are joined and fixed e.g., by spot welding to the lower inner edge flange portion 35a of the rear frame lower portion 131 in a state of being superimposed from above.

Joining of the front and rear upper inner edge flange portions 67c of the joint member 60 to the lower inner edge flange portion 35a of the rear frame lower portion 131 will be described in more detail.

For example, in joining the front and rear upper inner edge flange portions 67c to the lower inner edge flange portion 35a of the rear frame lower portion 131, as shown in FIG. 3 and FIG. 9, at the superimposed and connected part 131C between the rear portion of the lower front member 131F and the front portion of the lower rear member 131R of the rear frame 3, the front and rear upper inner edge flange portions 67c of the joint member 60 and the rear portion of the lower front member 131F of the rear frame 3 are superimposed on the front portion of the lower rear member 131R of the rear frame 3 in a state of clamping the front portion of the lower rear member 131R of the rear frame 3 from above and below, and these three sheets are integrally joined together e.g., by spot welding.

Consequently, as shown in FIG. 3 and FIG. 6, the front-rear position of the connecting surface portion 61 of the joint member 60 overlaps with the front-rear position of the superimposed and connected part 131C of the rear frame 3, and the connecting surface portion 61 is joined and fixed to the superimposed and connected part 131C via the upper inner edge flange portions 67c. Particularly, the connecting surface portion 61 is formed into a surface shape extending in the vehicle width direction and the front-rear direction.

As described above, at the front-rear position in the rear frame 3 which corresponds to the suspension housing 4, the joint member 60 connects the peripheral wall 42 with the vehicle-width-direction inner part of the rear frame 3 (the ridge extending in the front-rear direction at a position between the inner wall 33 and the lower inner edge flange portion 35a) in the vehicle width direction and hence, it is possible to partition the closed cross-section portion 3s of the rear frame 3 in the front-rear direction by both of the front second partition wall 62 or the rear second partition wall 63.

That is, as shown in FIG. 2 to FIG. 6, and FIG. 8, a configuration is adopted in which the front second partition wall 62 partitions the closed cross-section portion 3s of the rear frame 3 in the front-rear direction in cooperation with the front first partition wall 44, and/or the rear second partition wall 63 partitions the closed cross-section portion 3s of the rear frame 3 in cooperation with the rear first partition wall 45.

Particularly, as shown in FIG. 6, the connecting surface portion 61 of the joint member 60 is joined to the peripheral wall 42 via the upper outer edge flange portion 66c, and is joined to the inner edge flange of the rear frame lower portion 131 via the upper inner edge flange portions 67c. The upper outer edge flange portion 66c of the joint member 60 is joined and fixed to the peripheral wall inner portion 43 of the peripheral wall 42 at a position higher than an intermediate position hc of the peripheral wall 42 in the up-down direction. Consequently, the position at which the upper outer edge flange portion 66c of the joint member 60 is joined to the peripheral wall 42 is located at a position higher than the position at which the upper inner edge flange portions 67c of the joint member 60 are joined to the lower inner edge flange portion 35a of the rear frame lower portion 131.

Thus, the connecting surface portion 61 of the joint member 60 connects the peripheral wall inner portion 43 of the peripheral wall 42 with the lower inner edge flange portion 35a of the rear frame 3 in the closed cross-section portion 3s at the narrow width portion 37 in an attitude in which the connecting surface portion 61 is inclined or linearly inclined downward toward the vehicle-width-direction inner side.

As shown in FIG. 2 to FIG. 4, and FIG. 6 to FIG. 8, in the front-rear direction, the front-rear position of at least the connecting surface portion 61 of the joint member 60 may overlap with the front-rear position of the opening portion 46 formed in the damper mounting surface portion 41 in a penetrating manner. Particularly, in the present embodiment, the front-rear positions of the connecting surface portion 61, the front second partition wall 62, the rear second partition wall 63, the upper inner edge flange portions 67c, and the upper outer edge flange portion 66c of the joint member 60 overlap with the front-rear position of the opening portion 46 of the damper mounting surface portion 41.

As shown in FIG. 3 and FIG. 8, of the plurality of spot welded portions at which the joint member 60 is spot welded to the peripheral wall 42, spot welded portions at two positions, that is, front and rear positions, on the upper outer edge flange portion 66c of the joint member 60 are taken as upper outer fixation portions w6a, and spot welded portions at two positions, that is, upper and lower positions, on the front outer edge flange portion 66a are taken as front outer fixation portions w6b. Spot welded portions at two positions, that is, upper and lower positions, on the rear outer edge flange portion 66b are taken as rear outer fixation portions w6c.

As shown in FIG. 2, of the plurality of spot welded portions at which the joint member 60 is spot welded to the rear frame 3, spot welded portions at two positions, that is, front and rear positions, on the upper inner edge flange portions 67c of the joint member 60 are taken as upper inner fixation portions w6e, a spot welded portion on the front inner edge flange portion 67a is taken as a front inner fixation portion w6f, and a spot welded portion on the rear inner edge flange portion 67b is taken as a rear inner fixation portion w6g.

As shown by virtual straight lines Lb in FIG. 3, the front upper outer fixation portion w6a and the front upper inner fixation portion w6e may be provided at front-rear positions that overlap with each other. Particularly, the rear upper outer fixation portion w6a and the rear upper inner fixation portion w6e are provided at front-rear positions that overlap with each other.

As shown in FIG. 3 and FIG. 9, the above-mentioned spot welded portion w35 may be located between the front and rear upper inner fixation portions w6e at the superimposed and connected part 131C of the rear frame 3. Particularly, the lower inner edge flange portion 35a of the rear frame lower portion 131 and the upper inner edge flange portion 35b of the rear frame upper portion 132 may be integrally joined to each other in a state of clamping and being superimposed on, in the up-down direction, the outer edge in the vehicle width direction of the rear floor panel 2.

The rear floor pan 22 may be provided in such a way as to extend substantially horizontally and linearly in the vehicle width direction at a height position of the front and rear upper inner fixation portions w6e.

Symbols 6, 7 in FIG. 9 indicate through holes respectively formed in the lower rear member 131R and the intermediate rear cross member 55 in a penetrating manner so as to avoid interference of a welding gun with the front portion of the lower rear member 131R and the lower wall 55a of the intermediate rear cross member 55 in forming the spot welded portion w35, at which three sheets are superimposed on each other, at a position between the front and rear upper inner fixation portions w6e in the front-rear direction. For example, the welding gun is disposed below the front portion of the lower rear member 131R of the rear frame 3.

Particularly, as shown in FIG. 2, FIG. 9, Fig. 10(a), and Fig. 10(b), the front-rear position of the front outer edge flange portion 55f of the intermediate rear cross member 55 overlaps with the front-rear position of the front inner edge flange portion 67a of the joint member 60. Further particularly, the front-rear position of the front outer fixation portion w5a of the intermediate rear cross member 55 overlaps with the front-rear position of the front inner fixation portion w6f of the joint member 60.

In the same manner, as shown in FIG. 2 and FIG. 9, the front-rear position of the rear outer edge flange portion 55g of the intermediate rear cross member 55 may overlap with the front-rear position of the rear inner edge flange portion 67b of the joint member 60. For example, as shown in FIG. 2 and FIG. 9, the front-rear position of the rear outer fixation portion w5b of the intermediate rear cross member 55 overlaps with the front-rear position of the rear inner fixation portion w6g of the joint member 60.

As shown in FIG. 6, the front-rear position of the lower outer edge flange portion 55h of the intermediate rear cross member 55, particularly, the front-rear position of the lower outer fixation portion w5c, may overlap with the front-rear position of the joint member 60, specifically, the front-rear position of the connecting surface portion 61.

For example, as shown in FIG. 2, FIG. 3, FIG. 6, FIG. 7, and FIG. 9, the intermediate rear cross member 55 is provided at the front-rear position that overlaps with the suspension housing 4. In the present embodiment, the intermediate rear cross member 55 may be disposed at the front-rear position that overlaps with the damper top, that is, the opening portion 46 of the damper mounting surface portion 41.

As shown in FIG. 1 and FIG. 4, the lower vehicle-body structure V1 of an automobile of the present embodiment described above includes the rear frame 3 that constitutes the closed cross-section portion 3s extending in the front-rear direction on the vehicle-width-direction outer side of the rear floor panel 2 (floor panel), and the suspension housing 4, which may be made of sheet metal. The suspension housing 4 is provided to the rear frame 3, and supports the rear suspension damper 120 (suspension) (see FIG. 6). As shown in FIG. 2 to FIG. 9, the suspension housing 4 includes the damper mounting surface portion 41 and the peripheral wall 42. The damper mounting surface portion 41 may extend along the upper surface of the rear frame 3. The peripheral wall 42 extends downward from the peripheral edge of the damper mounting surface portion 41. As shown in FIG. 2, FIG. 3, FIG. 6, and FIG. 8, the front second partition wall 62 and/or the rear second partition wall 63 is provided inward of the peripheral wall 42 in the vehicle width direction. The front second partition wall 62 partitions the closed cross-section portion 3s of the rear frame 3 in the front-rear direction in cooperation with the front first partition wall 44 of the peripheral wall 42, and/or the rear second partition wall 63 partitions the closed cross-section portion 3s of the rear frame 3 in the front-rear direction in cooperation with the rear first partition wall 45 of the peripheral wall 42 (see FIG. 2, FIG. 3, and FIG. 8).

With such a configuration, as shown in FIG. 2, FIG. 3, and FIG. 8, even when a load toward the vehicle-width-direction inner side is transmitted from the suspension housing 4 during normal traveling, the front partition walls 44, 62 (the front first partition wall 44 and the front second partition wall 62) and/or the rear partition walls 45, 63 (the rear first partition wall 45 and the rear second partition wall 63) constitute a virtual joint and hence, it is possible to suppress angular displacement of the rear frame 3 about the center axis, thus suppressing inward falling deformation of the suspension housing 4.

Accordingly, it is possible to obtain excellent steering stability and preferable riding comfort.

As shown in FIG. 8, the front second partition wall 62 may be joined to the front first partition wall 44 via the front outer edge flange portion 66a, and/or the rear second partition wall 63 may be joined to the rear first partition wall 45 via the rear outer edge flange portion 66b.

With such a configuration, it is possible to properly partition the closed cross-section portion 3s of the rear frame 3 in the front-rear direction by the front first partition wall 44 and the front second partition wall 62 cooperating with each other and/or by the rear first partition wall 45 and the rear second partition wall 63 cooperating with each other and hence, it is possible to increase rigidity required to suppress inward falling deformation of the suspension housing 4, and angular displacement of the rear frame 3 about the center axis when the frame is viewed in a front view.

As shown in FIG. 8, the front first partition wall 44 may have a curved shape directing toward the vehicle-width-direction outer side as a distance toward the front side from the front outer fixation portions w6b with respect to the front second partition wall 62, that is, from the peripheral wall inner portion 43 of the peripheral wall 42, increases, and/or the rear first partition wall 45 may have a curved shape directing toward the vehicle-width-direction outer side as a distance toward the rear side from the rear outer fixation portions w6c with respect to the rear second partition wall 63, that is, from the peripheral wall inner portion 43 of the peripheral wall 42, increases.

With such a configuration, it is possible to increase rigidity compared with the case in which the front first partition wall 44 or the rear first partition wall 45 is formed into a linear shape extending in the vehicle width direction.

As shown in the drawing, the front first partition wall 44 and the rear first partition wall 45 may be disposed at a front part and a rear part of the peripheral wall 42 in a state of forming a pair in the front-rear direction.

With such a configuration, it is possible to increase rigidity compared with the case in which only either one of the front first partition wall 44 or the rear first partition wall 45 is provided.

As shown in the drawing, the joint member 60 extending in the vehicle width direction may be provided in the closed cross-section portion 3s at a position that corresponds to the vehicle-width-direction inner side of the peripheral wall 42 in the front-rear direction. The joint member 60 may include the front second partition wall 62 and the rear second partition wall 63 (second partition walls) provided in such a way as to extend in the vehicle width direction at a front part and a rear part of the joint member 60 in a state of forming a pair in the front-rear direction, and the connecting surface portion 61 (connecting portion).

With such a configuration, it is possible to increase rigidity compared with the case in which only either one of the front second partition wall 62 or the rear second partition wall 63 is provided. In addition, the front second partition wall 62 and the rear second partition wall 63 are connected with each other via the connecting surface portion 61 and hence, it is possible to increase rigidity compared with the case in which the front second partition wall 62 and the rear second partition wall 63 are provided independently.

As shown in FIG. 2, both of the front-rear position of the front second partition wall 62 and the front-rear position of the rear second partition wall 63 may overlap with the front-rear position of the opening portion 46 formed in the damper mounting surface portion 41 in a penetrating manner in the up-down direction.

With such a configuration, a load from the rear suspension damper 120 is input toward the vehicle-width-direction inner side from the opening portion 46 of the damper mounting surface portion 41, which is the mounting center of the damper, during normal traveling and hence, the front second partition wall 62 and the rear second partition wall 63 can be provided at positions as close as possible to an input source of load.

Accordingly, it is possible to effectively suppress inward falling deformation of the suspension housing 4, and angular displacement of the rear frame 3 about the center axis.

As shown in FIG. 5 and FIG. 8, the rear frame 3, particularly the rear frame 3 disposed adjacent to the suspension housing 4 may include the rear frame lower portion 131 (lower portion) having a U shape that is open upward in cross section in the vehicle width direction, and the rear frame upper portion 132 (upper portion) located above the rear frame lower portion 131 and constituting the closed cross-section portion 3s, that is, an inner space having a closed cross-sectional shape, in cooperation with the rear frame lower portion 131. The outer wall 34 (outer side wall) of the rear frame lower portion 131 may include the outer wall lower portion 341 (first part) substantially vertically extending upward from the lower wall 32 of the rear frame lower portion 131, and the outer wall upper portion 342 (second part) further inclined outward in the vehicle width direction as a distance from the upper end of the outer wall lower portion 341 increases above the outer wall lower portion 341. The peripheral wall 42 may be fixed to the outer wall lower portion 341 and the outer wall upper portion 342.

With such a configuration, the outer wall 34 includes not only the outer wall lower portion 341, but also the outer wall upper portion 342 and hence, a dimension of the closed cross-section portion 3s of the rear frame 3 is increased toward the vehicle-width-direction outer side. Accordingly, the peripheral wall 42 of the suspension housing 4 is fixed to both of the outer wall lower portion 341 and the outer wall upper portion 342 of the outer wall 34 whereas rigidity of the rear frame 3 is ensured and hence, it is possible to firmly support the suspension housing 4 to which loads toward the various directions are input from the rear suspension damper 120 (see FIG. 6).

In the correspondence between the components of the claims and the above-described embodiment, a vehicle may correspond to an automobile and, hereinafter, in the same manner,
a floor panel may correspond to the rear floor panel 2,
a frame may correspond to the rear frame 3,
first partition walls may correspond to the front first partition wall 44 and the rear first partition wall 45,
second partition walls may correspond to the front second partition wall 62 and the rear second partition wall 63,
a connecting portion may correspond to the connecting surface portion 61,
a lower portion may correspond to the rear frame lower portion 131,
an upper portion may correspond to the rear frame upper portion 132,
an outer side wall may correspond to the outer wall 34 of the rear frame lower portion 131,
a lower wall may correspond to the lower wall 32 of the rear frame lower portion 131,
a first part may correspond to the outer wall lower portion 341,
a second part may correspond to the outer wall upper portion 342,
fixation portions with respect to the second partition walls may correspond to the front outer fixation portion w6b and the rear outer fixation portion w6c, and
a suspension may correspond to the rear suspension damper 120. However, the present invention is not limited to only the configuration of the above-described embodiment, and many embodiments can be obtained.

For example, in the present embodiment, the front first partition wall 44 and the front second partition wall 62 are provided as the partition walls, and the rear first partition wall 45 and the rear second partition wall 63 are provided as the partition walls. However, the present invention may adopt a configuration that includes only either one of the front partition walls 44, 62 (the front first partition wall 44 and the front second partition wall 62) or the rear partition walls 45, 63 (the rear first partition wall 45 and the rear second partition wall 63).

Further, in the present embodiment, the front first partition wall 44 and the rear first partition wall 45, that is, the peripheral wall 42, are formed as a part of the outer wall 34 of the rear frame 3. However, the present embodiment is not limited to such a configuration. The present invention may adopt a configuration in which the peripheral wall 42 is provided as a member separate from the outer wall 34, such as a configuration in which the peripheral wall 42 is formed as a part of a joint member in the closed cross-section portion 3s of the rear frame 3.

### [Reference Signs List]

V1 lower vehicle-body structure
2 rear floor panel (floor panel)
3 rear frame (frame)
3s closed cross-section portion of rear frame
4 suspension housing
41 damper mounting surface portion
42 peripheral wall
44 front first partition wall (first partition wall)
45 rear first partition wall (first partition wall)
46 opening portion of damper mounting surface portion
61 connecting surface portion (connecting portion)
62 front second partition wall (second partition wall)
63 rear second partition wall (second partition wall)
32 lower wall of rear frame lower portion
34 outer wall (outer side wall) of rear frame lower portion
120 rear suspension damper (suspension)
131 rear frame lower portion (lower portion)
132 rear frame upper portion (upper portion)
341 outer wall lower portion (first part)
342 outer wall upper portion (second part)
w6b front outer fixation portion (fixation portion with respect to second partition wall)
w6c rear outer fixation portion (fixation portion with respect to second partition wall)

## Claims

1. A lower vehicle-body structure (V1) of a vehicle, the lower vehicle-body structure (V1) comprising:
a frame (3) that constitutes a closed cross-section portion (3s) extending in a front-rear direction on a vehicle-width-direction outer side of a floor panel (2); and
a suspension housing (4) provided to the frame (3), and supporting a suspension (120), wherein the suspension housing (4) includes a damper mounting surface portion (41), and a peripheral wall (42) extending downward from a peripheral edge of the damper mounting surface portion (41); and
one or more second partition walls (62, 63) provided inward of the peripheral wall (42) in a vehicle width direction, wherein
the second partition wall (62, 63) is configured to partition the closed cross-section portion (3s) of the frame (3) in the front-rear direction in cooperation with one or more first partition walls (44, 45) of the peripheral wall (42).

2. The lower vehicle-body structure (V1) according to claim 1, wherein
the suspension housing (4) is made of sheet metal.

3. The lower vehicle-body structure (V1) according to claim 1 or 2, wherein
the first partition wall (44, 45) is fixed to the second partition wall (62, 63).

4. The lower vehicle-body structure (V1) according to any one of the preceding claims, wherein
each of the first partition walls (44, 45) has a curved shape directing toward a vehicle-width-direction outer side as a distance toward a front side or a rear side from a fixation portion with respect to the respective second partition wall (62, 63) increases.

5. The lower vehicle-body structure (V1) according to any one of the preceding claims, wherein
the first partition walls (44, 45) are disposed at a front part and a rear part of the peripheral wall (42) in a state of forming a pair in the front-rear direction.

6. The lower vehicle-body structure (V1) according to any one of the preceding claims, further comprising
a joint member (60) extending in the vehicle width direction, wherein
the joint member (60) is provided in the closed cross-section portion (3s) at a position that corresponds to a vehicle-width-direction inner side of the peripheral wall (42) in the front-rear direction.

7. The lower vehicle-body structure (V1) according to claim 6, wherein
the joint member (60) includes the second partition walls (62, 63) provided in such a way as to extend in the vehicle width direction at a front part and a rear part of the joint member (60) in a state of forming a pair in the front-rear direction, and a connecting portion (61) connecting the second partition walls (62, 63) forming the pair in the front-rear direction.

8. The lower vehicle-body structure (V1) according to claim 7, wherein
the connecting portion (61) is joined to the peripheral wall (42) of the suspension housing (4) and an upper portion (132) of the frame (3).

9. The lower vehicle-body structure (V1) according to claim 8, wherein
the connecting portion (61) is inclined downward toward the vehicle-width-direction inner side.

10. The lower vehicle-body structure (V1) according to any one of claims 6 to 9, wherein
the frame (3) has an upper wall (31) provided above the joint member (60).

11. The lower vehicle-body structure (V1) according to any one of the preceding claims, wherein
a position in the front-rear direction of the second partition wall (62, 63) overlaps with a position in the front-rear direction of an opening portion (46) formed in the damper mounting surface portion (41) in a penetrating manner in an up-down direction.

12. The lower vehicle-body structure (V1) according to any one of the preceding claims, wherein
the frame (3) disposed adjacent to the suspension housing (4) includes a lower portion (131) having a U shape that is open upward in cross section in the vehicle width direction, and an upper portion (132) located above the lower portion (131) and constituting the closed cross-section portion (3s) in cooperation with the lower portion (131),
an outer side wall (34) of the lower portion (131) includes a first part (341) extending upward from a lower wall (32) of the lower portion (131), and a second part (342) further inclined outward in the vehicle width direction as a distance from an upper end of the first part (341) increases above the first part (341), and
the peripheral wall (42) is fixed to the first part (341) and the second part (342).

13. The lower vehicle-body structure (V1) according to any one of the preceding claims, wherein
wherein the second partition wall (62, 63) is joined to the first partition wall (44, 45) and an inner wall (33) of the frame (3) in the vehicle width direction.

14. The lower vehicle-body structure (V1) according to any one of the preceding claims, wherein
wherein the second partition wall (62, 63) is joined to a lower wall (32) of the frame (3).

15. A vehicle comprising the lower vehicle-body structure (V1) of any one of the preceding claims.
